# EUROPEAN PATENT APPLICATION

(11) **EP 4 230 778 A1**
(43) Date of publication of application: **23.08.2023**
(21) Application number: 21879907.0
(22) Date of filing: 04.10.2021
(51) Int. Cl.: D01F 8/04, D01F 8/06, D01F 8/10, D01F 8/12, D01F 8/14

(54) **COMPOSITE FIBER AND FIBER STRUCTURE CONTAINING SAME**

(30) Priority: 14.10.2020 JP 2020173448
(71) Applicant: Kuraray Trading Co., Ltd., Osaka-shi, Osaka 530-8611 (JP)
(72) Inventor: YAMASAKI, Kohei, Kurashiki-shi, Okayama 713-8550 (JP); NAKATSUKA, Hitoshi, Saijo-shi, Ehime 793-8585 (JP); IKEDA, Takayuki, Kurashiki-shi, Okayama 713-8550 (JP); ONOGI, Shoji, Osaka-shi, Osaka 530-8611 (JP)
(74) Representative: Müller-Boré & Partner Patentanwälte PartG mbB
(86) International application number: PCT/JP2021/036634
(87) International publication number: WO 2022/080167

(57) **Abstract**

The present invention relates to a composite fiber comprising component A as a core component and component B at least partially covering the component A, wherein the component A comprises a vibration damping elastomer having a peak top intensity of tan δ of 0.5 or more and the component B comprises a thermoplastic elastomer having a peak top intensity of tan δ of less than 0.5, and wherein the component B covers 70% or more of the cross-sectional perimeter of the component A in the fiber cross-section.

## Description

### TECHNICAL FIELD

The present invention relates to a composite fiber and a fiber structure comprising the composite fiber.

### BACKGROUND ART

Conventionally, fibers with vibration damping performance have been used in various applications where vibration control is required. For example, as a vibration damping fiber suitable for wall materials, floor materials, carpet materials, and the like, where vibration damping performance is required mainly from the viewpoint of acoustic insulation and soundproofing, Patent Document 1 discloses a composite fiber whose core component is a block copolymer consisting of a styrene block (A) and an isoprene block (B) and whose sheath component is a fiber forming polymer with a glass transition temperature of 45°C or more. Patent Document 2 discloses a composite fiber in which a thermoplastic elastomer (A) with a glass transition temperature of -40 to 30°C is covered with a readily soluble or degradable thermoplastic polymer (B).

### PRIOR ART DOCUMENTS

### PATENT DOCUMENTS

Patent Document 1: JP H05-051823 A
Patent Document 2: JP 2015-193953 A

### SUMMARY OF THE INVENTION

### PROBLEMS TO BE SOLVED BY THE INVENTION

However, although the composite fibers disclosed in the above patent documents are fibers that can be expected to have high vibration damping performance, the temperature range where they may exert vibration damping performance is relatively narrow, and depending on the temperature of the use environment, they may not sufficiently exert high vibration damping performance. For this reason, they were not necessarily suitable as vibration damping fibers for use not only in the above applications such as wall materials, flooring materials, carpet materials and the like, but also in various applications where the use environment temperature is changeable or where they are used under various temperatures, such as sportswear, inner wear, and shoe materials.

An object of the present invention is to provide a vibration damping fiber that can exert high vibration damping performance over a wide temperature range and is suitable for various applications used in various temperature environments.

### SOLUTIONS TO THE PROBLEMS

The inventors arrived at the present invention as a result of the intensive study to solve the above problem. That is, the present invention encompasses the following preferred embodiments.
[1] A composite fiber comprising component A as a core component and component B at least partially covering the component A, wherein the component A comprises a vibration damping elastomer having a peak top intensity of tan δ of 0.5 or more, and the component B comprises a thermoplastic elastomer having a peak top intensity of tan δ of less than 0.5, and the component B covers 70% or more of the cross-sectional perimeter of the component A in the fiber cross-section.
[2] The composite fiber according to the above [1], wherein a difference between the peak top temperature of tan δ of the component A and the peak top temperature of tan δ of the component B is between 0°C and 85°C, inclusive.
[3] The composite fiber according to the above [1] or [2], wherein the peak top of tan δ of the component A is located in the temperature range between -30°C and 70°C, inclusive.
[4] The composite fiber according to any one of the above [1] to [3], wherein the peak top intensity of tan δ of the composite fiber is 0.15 or more.
[5] The composite fiber according to any one of the above [1] to [4], wherein the vibration damping elastomer is a block copolymer comprising a polymer block (a) mainly composed of a vinyl aromatic compound and a polymer block (b) mainly composed of a conjugated diene-based compound and/or a hydrogenated product thereof.
[6] The composite fiber according to the above [5] satisfying the following (1) and (2):
   (1) the content of the polymer block (a) in the block copolymer and/or hydrogenated product thereof is 1 to 30% by mass, and
   (2) the total content of 1,2-bonding units and 3,4-bonding units in the polymer block (b) in the block copolymer and/or hydrogenated product thereof is 70% by mol or more.
[7] The composite fiber according to any one of the above [1] to [6], wherein the vibration damping elastomer is a hydrogenated product of a block copolymer comprising a polymer block (a) mainly composed of a vinyl aromatic compound and a polymer block (b) mainly composed of a conjugated diene-based compound, and wherein the hydrogenation ratio of the polymer block (b) in the hydrogenated product is 80% by mol or more.
[8] The composite fiber according to any one of the above [1] to [7], wherein the thermoplastic elastomer has a glass transition temperature of less than 45°C.
[9] The composite fiber according to any one of the above [1] to [8], wherein the thermoplastic elastomer is at least one selected from the group consisting of a polyamide-based elastomer and a polyester-based elastomer.
[10] A fiber structure comprising at least a portion of the composite fiber according to any one of the above [1] to [9].

### EFFECTS OF THE INVENTION

According to the present invention, there can be provided a vibration damping fiber that can exert high vibration damping performance over a wide temperature range and is suitable for various applications used in various temperature environments.

### DETAILED DESCRIPTION

Hereinafter, embodiments of the present invention will be described in detail. The scope of the present invention is not limited to the embodiments described here, and various modifications may be made without departing from the purport of the invention.

### <Composite Fiber>

The composite fiber of the present invention is a composite fiber comprising component A as a core component, and component B at least partially covering the component A. The component A, which constitutes the composite fiber of the present invention, comprises a vibration damping elastomer having a peak top intensity of tan δ of 0.5 or more (hereinafter also referred to as a "vibration damping elastomer (A)"), and the component B comprising a thermoplastic elastomer having a peak top intensity of tan δ of less than 0.5 (hereinafter also referred to as a "thermoplastic elastomer (B)"). The component (A) serving as the core component of the composite fiber comprises the vibration damping elastomer (A), and thereby high vibration damping performance can be imparted to the core component. In addition, the component B serving as the sheath component and covering the core component comprises the thermoplastic elastomer (B), and thereby the inherent vibration damping performance of the core component is easily exerted sufficiently, and a composite fiber with excellent vibration damping performance in a wide temperature range may be obtained.

### (Component A)

The vibration damping elastomer (A) has a tan δ peak top intensity of 0.5 or more. Here, tan δ can be determined by dynamic viscoelasticity measurement, also referred to as loss tangent, and is obtained by dividing the loss elastic modulus by the storage modulus. The higher this value is, the higher vibration damping properties are expected. The peak-top intensity of tan δ means the intensity of the peak, where the tan δ value becomes maximum. When the value is 0.5 or more, the core component has high vibration damping properties, and high vibration damping performance is easily secured also when it is made into a composite fiber. From the viewpoint of giving the desired dispersion behavior of tan δ to the component A and improving the vibration damping performance of the composite fiber more, the peak top intensity of tan δ of the vibration damping elastomer (A) is preferably 0.6 or more, more preferably 0.8 or more, still more preferably 1.0 or more, and particularly preferably 1.5 or more. The upper limit value of the peak top intensity of tan δ is not particularly limited, but higher tan δ values tend to increase the melt viscosity of the elastomer. Therefore, from the viewpoint of handling properties and spinnability of the component A, the peak top intensity of tan δ of the vibration damping elastomer (A) is, for example, 4.0 or less, and preferably 3.0 or less.

In the present invention, the above tan δ is measured with a dynamic viscoelasticity measuring device at a frequency of 1 Hz and a measurement temperature of -70 to 100°C according to JIS K 7244-10. In detail, it may be measured according to the method described in the examples below. The tan δ for the thermoplastic elastomer (B), component A, and component B is also measured in the same manner as described above.

The peak top of tan δ of the vibration damping elastomer (A) is preferably located in the temperature range between -30°C and 70°C, inclusive. When the peak of the tan δ value of the vibration damping elastomer (A) is in the above temperature range, the desired tan δ dispersion behavior is easily given to the component A, thus making it possible to obtain a composite fiber having high vibration damping performance when used under living temperatures or environment temperatures generally assumed (for example, the temperature range of -10 to 50°C). From a more practical point of view, the peak top of tan δ of the vibration damping elastomer (A) is more preferably located in the temperature range of -25°C or more, and still more preferably -20°C or more. Also, it is more preferably located in the temperature range of 65°C or less, and still more preferably 60°C or less.

The maximum width of the temperature range where the tan δ value of the vibration damping elastomer (A) continuously exceeds 0.3 or more is preferably 5°C or more. The maximum width of the temperature range where the tan δ value continuously exceeds 0.3 or more refers to the width of a continuous temperature range from a temperature (t) where the tan δ value of the vibration damping elastomer (A) becomes 0.3 or more to a temperature (t') where it becomes 0.3 or less through the peak top, and is expressed as a difference (°C) between the temperature (t) and the temperature (t'). The tan δ value is always 0.3 or more in this temperature range. When the maximum width of the temperature range is 5°C or more, the core component formed by including the vibration damping elastomer (A) may exert high vibration damping properties over a wide temperature range. This makes it possible to obtain a composite fiber that may adapt to various temperature environments. The maximum width of the temperature range is more preferably 10°C or more, still more preferably 20°C or more, and particularly preferably 30°C or more, from the viewpoint of the ease of obtaining a composite fiber with high vibration damping properties in a wider temperature range. The upper limit value of the maximum width of the temperature range is not particularly limited, but is usually less than 100°C or less, for example, it may be 80°C or less.

The vibration damping elastomer (A) is not particularly limited as long as it is an elastomer having a peak top intensity of tan δ of 0.5 or more. For example, thermoplastic elastomers such as polyurethane-based elastomers, polystyrene-based elastomers, polyolefin-based elastomers, polyamide-based elastomers, or polyester-based elastomers may be used. Given that the specific dispersion behavior of tan δ as described above is easily exhibited, a suitable vibration damping elastomer (A) in the present invention includes a block copolymer comprising a polymer block (a) mainly composed of a vinyl aromatic compound and a polymer block (b) mainly composed of a conjugated diene-based compound (hereinafter also referred to as a "block copolymer (A1)") and/or a hydrogenated product thereof, 4-methyl-1-pentene·α-olefin copolymer, and the like. The vibration damping elastomer (A) may be a polymer composition (elastomer compound) comprising the block copolymer (A1) or hydrogenated product thereof with a softener for hydrocarbon-based rubber. The vibration damping elastomer (A) may be used singly or in combination of two or more types thereof.

The vinyl aromatic compound constituting the polymer block (a) includes, for example, styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene p-chloromethylstyrene, o-bromomethylstyrene, m-bromomethylstyrene, p-bromomethylstyrene, styrene derivatives substituted with silyl groups, indene, vinylnaphthalene, vinylanthracene, N-vinylcarbazole, and the like. These vinyl aromatic compounds may be used singly or in combination of two or more types thereof. Among these, styrene, α-methylstyrene, p-methylstyrene, and mixtures thereof are preferred, and styrene is more preferred.

In the present specification, "mainly composed of a vinyl aromatic compound" means that the polymer block (a) comprises 60% by mol or more of structural units derived from the vinyl aromatic compound based on the total structural units constituting the polymer block (a). From the viewpoint of mechanical properties, handling properties and the like, the ratio of structural units derived from the vinyl aromatic compound in the polymer block (a) is preferably 70% by mol or more, more preferably 80% by mol or more, still more preferably 85% by mol or more, particularly preferably 90% by mol or more, especially preferably 95% by mol or more, and it may be substantially 100% by mol.

Structural units that the polymer block (a) may contain other than the structural units derived from the vinyl aromatic compound include, for example, structural units derived from unsaturated monomers other than the vinyl aromatic compound. The structural units derived from such unsaturated monomers specifically include, for example, butadiene, isoprene, 2,3-dimethylbutadiene, 1,3-pentadiene, 1,3-hexadiene, isobutylene, methyl methacrylate, methyl vinyl ether, β-pinene, 8,9-p-menthene, dipentene, methylene norbornene, 2-methylenetetrahydrofuran and the like. When the polymer block (a) comprises structural units other than the vinyl aromatic compound, the bonding mode is not particularly limited and may be random, tapered, block or a combination thereof.

When the polymer block (a) contains structural units other than the structural units derived from the vinyl aromatic compound, the content thereof is preferably less than 20% by mol or less, more preferably 10% by mol or less, and still more preferably 5% by mol or less. In one preferred embodiment of the present invention, the polymer block (a) contains substantially no structural units other than the structural units derived from the vinyl aromatic compound (i.e., 0% by mol).

The block copolymer (A1) comprises at least one polymer block (a). When the block copolymer (A1) contains two or more polymer blocks (a), these polymer blocks (a) may be identical to or different from each other. In the present specification, "polymer blocks are different" means that at least one of the monomer units constituting the polymer block, weight-average molecular weight, stereoregularity, and, in the case of having a plurality of monomer units, the ratio of each monomer unit and the copolymerization mode (random, gradient, block, and the like) is different. This is also the same for the polymer block (b) described below.

In one preferred embodiment of the present invention, the block copolymer (A1) preferably contains two polymer blocks (a).

The weight-average molecular weight (Mw) of the polymer block(s) (a) contained in the block copolymer (A1) is not particularly limited, but of the polymer block(s) (a) possessed by the block copolymer (A1), the weight-average molecular weight of at least one polymer block (a) is preferably 3,000 to 60,000, and more preferably 4,000 to 50,000. The block copolymer (A1) contains at least one polymer block (a) having a weight-average molecular weight within the above range, and thereby mechanical properties may be more improved. The above weight-average molecular weight is a weight-average molecular weight in terms of polystyrene obtained by gel permeation chromatography (GPC) measurement. The same applies also to the polymer block (b) described below.

The glass transition temperature of the polymer block (a) is preferably 130°C or less, and more preferably 120°C or less. Also, it is preferably 70°C or more, and more preferably 80°C or more. If the glass transition temperature of the polymer block (a) is within the above range, it is easier to control the tan δ value of the component A including the block copolymer (A1) within a specific range, leading to improvement in the vibration damping performance of the resulting composite fiber. The glass transition temperature may be measured by differential scanning calorimetry (DSC). The same also applies to the vibration damping elastomer (A), thermoplastic elastomer (B) described below.

The content of the polymer block (a) in the block copolymer (A1) (in the case of including a plurality of polymer blocks (a), their total content) is preferably 1 to 30% by mass based on the total mass of the block copolymer (A1). The tan δ value of the vibration damping elastomer (A) varies depending on the morphology of the block copolymer (A1). The tan δ tends to increase when it takes a microphase-separated structure comprising a sphere structure. The content of the polymer block (a) in the block copolymer (A) may significantly affect the ease of forming the sphere structure. Therefore, it is important to adjust the content of the block polymer (a) to further improve the vibration damping performance of the resulting composite fiber. In particular, when the content of the polymer block (a) is within the above range, the mechanical properties of the composite fiber can be improved when it is made into a composite fiber. In addition, the peak top intensity of tan δ of the composite fiber tends to be higher, and the maximum width of the temperature range where the tan δ value is 0.1 or more tends to be wider. Therefore, a composite fiber having high vibration damping performance over a wide temperature range can be obtained. In addition, the spinnability when producing a composite fiber is improved, which is advantageous in that it may be spun at high speed and efficiently. From these points of view, the content of the polymer block (a) is more preferably 2% by mass or more, still more preferably 3% by mass or more, particularly preferably 5 mass% or more, and especially preferably 8% by mass or more. Also, it is more preferably 28% by mass or less, still more preferably 27 mass% or less, particularly preferably 18% by mass or less, and especially preferably 15% by mass or less.

The content of the polymer block (a) in the block copolymer (A1) is determined by ^{I}H-NMR spectrum.

The conjugated diene-based compound constituting the polymer block (b) include, for example, isoprene, butadiene, hexadiene, 2,3-dimethyl-1,3-butadiene, 1,3-pentadiene, myrcene. These conjugated diene-based compounds may be used singly or in combination of two or more types thereof. Among these, isoprene, butadiene, and a mixture of isoprene and butadiene are preferred, a mixture of isoprene and butadiene, and isoprene are more preferred, from the viewpoints of the ease of availability, versatility, controllability of the bonding mode as described below.

When the conjugated diene-based compound is a mixture of butadiene and isoprene, their mixing ratio [isoprene/butadiene] (mass ratio) is not particularly limited. Preferably it is 5/95 to 95/5, more preferably 10/90 to 90/10, still more preferably 40/60 to 70/30, and particularly preferably 45/55 to 65/35. The mixing ratio [isoprene/butadiene], in molar ratio, is preferably 5/95 to 95/5, more preferably 10/90 to 90/10, still more preferably 40/60 to 70/30, and particularly preferably 45/55 to 55/45.

In the present specification, "mainly composed of a conjugated diene-based compound" means that the polymer block (b) comprises 60% by mol or more of structural units derived from the conjugated diene-based compound based on the total structural units constituting the polymer block (b). The ratio of the structural units derived from the conjugated diene-based compound in the polymer block (b) is preferably 65% by mol or more, more preferably 80% by mol or more, and still more preferably 85% by mol or more. The upper limit value thereof is not particularly limited, and may be substantially 100% by mol.

The polymer block (b) may have structural units derived from only one conjugated diene-based compound, or may have structural units derived from two or more conjugated diene-based compounds. In the present invention, the polymer block (b) is mainly composed of structural units derived from a conjugated diene-based compound (hereinafter also referred to as "conjugated diene structural units"). As the conjugated diene structural units, it is preferred to contain in each case, for example, 60% by mol or more of structural units derived from isoprene (hereinafter also referred to as "isoprene units"), structural units derived from butadiene (hereinafter also referred to as "butadiene units), or structural units derived from a mixture of isoprene and butadiene (hereinafter also referred to as "isoprene/butadiene mixture units"). When the polymer block (b) contains 60% by mol or more of at least one structural units selected from the group consisting of the above structural units as the conjugated diene structural units, it may be an elastomer with segments that exhibit good vibration damping performance.

When the polymer block (b) contains two or more conjugated diene structural units, their bonding mode may be any of random, tapered, fully alternating, partially block, or a combination thereof.

The polymer block (b) may contain structural units derived from another unsaturated monomer other than the conjugated diene structural units. The other unsaturated monomer includes vinyl aromatic compounds such as styrene, α-methylstyrene, o-methylstyrene, m-methylstyrene, p-methylstyrene, p-t-butylstyrene, 2,4-dimethylstyrene, vinylnaphthalene and vinylanthracene, and structural units derived from methyl methacrylate, methyl vinyl ether, N-vinylcarbazole, β-pinene, 8,9-p-menthene, dipentene, methylene norbornene, 2-methylenetetrahydrofuran, 1,3-cyclopentadiene, 1,3-cyclohexadiene, 1,3-cycloheptadiene, and 1,3-cyclooctadiene. Among these, styrene, α-methylstyrene, and p-methylstyrene are preferred, and styrene is more preferred. When the polymer block (b) contains structural units derived from the other unsaturated monomer other than the conjugated diene structural units, specific combinations thereof are preferably isoprene and styrene, butadiene and styrene, and more preferably isoprene and styrene.

When the polymer block (b) contains structural units derived from the other unsaturated monomer, their bonding mode is not particularly limited and may be random or tapered.

When the polymer block (b) contains the other structural units other than the conjugated diene structural units, the content thereof is less than 40% by mol, preferably less than 35% by mol, and more preferably less than 20% by mol, based on the total structural units constituting the polymer block (b). In one preferred embodiment of the present invention, the polymer block (b) substantially contains no other structural units other than the conjugated diene structural units (i.e., 0% by mol).

When monomer units constituting the polymer block (b) are any one of isoprene units, butadiene units, and isoprene/butadiene mixture units, as the respective bonding modes of isoprene and butadiene, 1,2-bonds and 1,4-bonds may be formed in the case of butadiene, and 1,2-bonds, 3,4-bonds, and 1,4-bonds may be formed in the case of isoprene.

In the block copolymer (A1), the total content of 1,2-bonding units and 3,4-bonding units in the polymer block (b) (hereinafter also referred to as "vinyl bond amount") is preferably 45% by mol or more, more preferably 70% by mol or more, still more preferably 75% by mol or more, and particularly preferably 80% by mol or more. If the vinyl bond amount in the polymer block (b) is higher than the lower limit value, the peak top intensity of tan δ in the core component tends to be high. This makes it easier to maintain the tan δ value of 0.1 or more over a wide temperature range when it is made into a composite fiber, and to obtain a composite fiber that exhibits high vibration damping performance over a wide temperature range and may adapt to various temperature environments. The upper limit value of the vinyl bond amount in the polymer block (b) is not particularly limited, but is preferably 95% by mol or less, and more preferably 90% by mol or less.

Here, the vinyl bond amount is calculated by dissolving the block copolymer in CDCl₃ and measuring the ¹H-NMR spectrum. From the ratio between the total peak area of the structural units derived from isoprene and/or butadiene and the peak areas of 3,4- and 1,2-bonding units in isoprene units, 1,2-bonding units in butadiene units, or, in the case of the structural units derived from a mixture of isoprene and butadiene, the peak area corresponding to each of the bonding units, the vinyl bond amount (the total content of 1,2-bonding units and 3,4-bonding units) can be calculated.

When the polymer block (b) consists only of butadiene, the above "content of 1,2-bonding units and 3,4-bonding units" shall be read and applied as "content of 1,2-bonding units".

The weight-average molecular weight of the polymer block (b) in the block copolymer (A1) is preferably 15,000 to 800,000, more preferably 50,000 to 700,000, still more preferably 70,000 to 600,000, particularly preferably 90,000 to 500,000, and most preferably 130,000 to 450,000, from the viewpoint of vibration damping properties, and the like. When the vibration damping elastomer (A1) is a hydrogenated product of the block copolymer (A1), the above weight-average molecular weight means the value in the state before hydrogenation.

The block copolymer (A1) may have at least one polymer block (b) described above. When the block copolymer (A1) has two or more polymer blocks (b), these polymer blocks (b) may be identical to or different from each other.

In one preferred embodiment of the present invention, the block copolymer (A1) preferably contains only one polymer block (b).

The content of the polymer block (b) in the block copolymer (A1) (in the case of having a plurality of polymer blocks (b), their total content) is preferably 70 to 99% by mass based on the total mass of the block copolymer (A1). The tan δ value of the vibration damping elastomer (A) varies depending on the morphology of the block copolymer (A1), and the tan δ tends to be high when it takes a microphase-separated structure comprising a sphere structure. The content of the polymer block (b) in the block copolymer (A) may significantly affect the ease of forming the sphere structure. Therefore, adjusting the content of the block polymer (b) is important to more improve the vibration damping performance of the resulting composite fiber. In particular, when the content of the polymer block (b) is within the above range, the mechanical properties of the composite fiber can be improved when it is made into a composite fiber. In addition, the peak top intensity of tan δ becomes higher, and the maximum width of the temperature range where the tan δ value becomes 0.1 or more tends to be wider. It is also advantageous in that it improves the spinnability when manufacturing a composite fiber and enables high-speed, efficient spinning. From these viewpoints, the content of the polymer block (b) is more preferably 73% by mass or more, still more preferably 82% by mass or more, and particularly preferably 85% by mass or more. Also, it is more preferably 98% by mass or less, still more preferably 97% by mass or less, particularly preferably 95% by mass or less, and especially preferably 92% by mass or less.

The content of the polymer block (b) in the block copolymer (A1) is determined by ¹H-NMR spectrum.

In the block copolymer (A1), as long as the polymer block (a) and the polymer block (b) are bonded together, the bonding mode thereof is not limited, and may be linear, branched, radial, or a combination of two or more of these. Among these, the bonding mode of the polymer block (a) and the polymer block (b) is preferably linear. Examples thereof may include diblock copolymers denoted by a-b, triblock copolymers denoted by a-b-a or b-a-b, tetrablock copolymers denoted by a-b-a-b, pentablock copolymers denoted by a-b-a-b-a or b-a-b-a-b, and (a-b)nX-type copolymers (X represents a coupling agent residue and n represents an integer of to 3 or more) when the polymer block (a) is denoted by a, and the polymer block (b) is by b. Among these, linear triblock copolymers or diblock copolymers are preferred, and a-b-a triblock copolymers are preferably used from the viewpoints of flexibility and ease of manufacture.

In the present specification, when polymer blocks of the same type are linearly bonded through a bifunctional coupling agent or the like, the entirety of the bonded polymer blocks is treated as one polymer block. In accordance with this, including the above example, polymer blocks that should originally be strictly denoted as Y-X-Y (X represents a coupling agent residue) are denoted as Y as a whole, except the case that it is particularly necessary to distinguish them from a single polymer block Y. In the present specification, this type of polymer block containing a coupling agent residue is treated as described above. Thus, for example, a block copolymer that contains a coupling agent residue and should strictly be denoted a-b-X-b-a (X represents a coupling agent residue) is denoted as a-b-a, and treated as an example of a triblock copolymer.

In one embodiment of the present invention, the vibration damping elastomer (A) satisfies the following (1) and (2):
(1) the content of the polymer block (a) in the block copolymer and/or hydrogenated product thereof is 1 to 30% by mass, and
(2) the total content of 1,2-bonding units and 3,4-bonding units in the polymer block (b) in the block copolymer and/or hydrogenated product thereof is 70% by mol or more.

By satisfying the above (1) and (2), the peak top intensity of tan δ of the component A can be higher, and it becomes easier to maintain a high tan δ value over a wide temperature range when it is made into a composite fiber. Therefore, a composite fiber which exhibits high vibration damping performance over a wide temperature range, and may apply to various temperature environments can be obtained.

In one embodiment of the present invention, the vibration damping elastomer (A) is preferably a hydrogenated product of the block copolymer (A1) (hereinafter also referred to as a "hydrogenated block copolymer (A1')"), wherein 80% by mol or more of carbon-carbon double bonds possessed by the polymer block (b) are preferably hydrogenated (hereinafter also referred to as "hydrogenation"). A high hydrogenation ratio of the polymer block (b) may give the composite fiber high vibration damping performance over a wide temperature range, and tends to and have excellent lightfastness. Therefore, the hydrogenation ratio of the polymer block (b) is more preferably 85% by mol or more, more preferably 90% by mol or more, particularly preferably 93% by mol or more, and especially preferably 95% by mol or more (this value is also hereinafter referred to as a "hydrogenation ratio". The upper limit value of the hydrogenation ratio is not particularly limited and may be 99% by mol or less, or 98% by mol or less.

The above hydrogenation ratio is the value obtained by ¹H-NMR measurement of the content of carbon-carbon double bonds in structural units derived from conjugated diene-based compounds in the polymer block (b) after hydrogenation.

In one embodiment of the present invention, the vibration damping elastomer (A) is a hydrogenated block copolymer (A1'), and in addition to the above (1) and (2), it preferably satisfies the following (3):
(3) the hydrogenation ratio of the polymer block (b) in the hydrogenated product is 85% by mol or more.

By satisfying the above (1) to (3), the peak top intensity of tan δ of the composite fiber can be higher, and it becomes easier to exhibit high tan δ values over a wide temperature range, thus making it possible to obtain a composite fiber which may exert high vibration damping performance over a wider temperature range.

The weight-average molecular weight of the hydrogenated block copolymer (A1') as determined by gel permeation chromatography in terms of standard polystyrene is preferably 20,000 or more, more preferably 50,000 or more, still more preferably 60,000 or more, and particularly preferably 80,000 or more. Also, it is preferably 800,000 or less, more preferably 700,000 or less, still more preferably 500,000 or less, and particularly preferably 400,000 or less. If the weight-average molecular weight of the hydrogenated block copolymer (Al') is higher than the above lower limit value, it tends to have high heat resistance, and if it is lower than the upper limit value, it tends to have good moldability.

The hydrogenated block copolymer (A1') may have one or two or more functional groups such as carboxyl groups, hydroxyl groups, acid anhydride groups, amino groups, and epoxy groups in molecular chains and/or at molecular ends as long as the purpose and effect of the invention are not impaired, or it may have no functional groups.

When the vibration damping elastomer (A) is a hydrogenated block copolymer (A1'), the nuclear hydrogenation ratio of the vinyl aromatic compound in the polymer block (a) is preferably 8% by mol or less, more preferably 6% by mol or less, still more preferably 5% by mol or less, particularly preferably 4% by mol or less, and especially preferably 3.5% by mol or less. When the nuclear hydrogenation ratio of the vinyl aromatic compound in the polymer block (a) is lower than the above upper limit value, the desired mechanical properties are easily obtained. The lower limit value of the nuclear hydrogenation ratio is not particularly limited and may be 0%.

The above nuclear hydrogenation ratio is determined from the content of the vinyl aromatic compound before hydrogenation and the content of the vinyl aromatic compound after hydrogenation.

The method for producing a block copolymer (A1) is not particularly limited and may be produced according to conventionally known methods such as a solution polymerization, emulsion polymerization, or solid-phase polymerization method. Among these, the solution polymerization method is preferred. For example, anionic polymerization, cationic polymerization, radical polymerization methods may be employed. In the case of anionic polymerization, specific examples of the method include:
(i) a method of sequentially polymerizing a vinyl aromatic compound, a conjugated diene-based compound, and then a vinyl aromatic compound using an alkyl lithium compound as a polymerization initiator;
(ii) a method of sequentially polymerizing a vinyl aromatic compound and a conjugated diene-based compound using an alkyl lithium compound as a polymerization initiator, followed by addition of a coupling agent for coupling;
(iii) a method of sequentially polymerizing a conjugated diene-based compound and then a vinyl aromatic compound, using a dilithium compound as a polymerization initiator.

Examples of the alkyl lithium compound include methyl lithium, ethyl lithium, n-butyl lithium, sec-butyl lithium, tert-butyl lithium, and pentyl lithium. The dilithium compound includes, for example, naphthalene dilithium, and dilithiohexylbenzene.

Examples of the coupling agent include dichloromethane, dibromomethane, dichloroethane, dibromoethane, dibromobenzene, and phenyl benzoate.

Examples of the solvents include aliphatic hydrocarbons such as cyclohexane, methylcyclohexane, n-hexane and n-pentane; and aromatic hydrocarbons such as benzene, toluene and xylene.

The conditions of the polymerization reaction may be determined as appropriate to obtain the desired block copolymer (A1). For example, the polymerization reaction may be carried out under the conditions of, for example, a temperature of 0 to 100°C, preferably 10 to 70°C, for 0.5 to 50 hours, preferably 1 to 30 hours.

When the conjugated diene-based compound is used, the vinyl bond amount in the polymer block (b) can be increased by adding a Lewis base during anionic polymerization. By adjusting the amount of the Lewis base added, the vinyl bond amount in the vibration damping elastomer (A) can be easily controlled. By controlling these, the tan δ peak temperature and height of the vibration damping elastomer (A) can be adjusted. For example, as the vinyl bond amount increases by adding the Lewis base in the vibration damping elastomer (A), the tan δ value tends to be higher, and the maximum width of the temperature range where the tan δ value is 0.1 or more tends to be wider. Therefore, controlling this value within a specific range can effectively improve the vibration damping performance of the resulting core component or composite fiber. In particular, by increasing the hydrogenation ratio along with the vinyl bond amount, the tan δ value can be raised over a wide range, and the above better effects can be expected.

Examples of the above Lewis base include esters such as ethyl acetate; amines such as triethylamine, N,N,N',N'-tetramethylethylenediamine (TMEDA), and N-methylmorpholine; nitrogen-containing heterocyclic aromatic compounds such as pyridine; amides such as dimethylacetamide; ethers such as dimethyl ether, diethyl ether, tetrahydrofuran (THF), and dioxane; glycol ethers such as ethylene glycol dimethyl ether and diethylene glycol dimethyl ether; sulfoxides such as dimethyl sulfoxide; and ketones such as acetone and methyl ethyl ketone. When the polymer block (b) contains isoprene units, it is preferable to use 2,2-di(2-tetrahydrofuryl)propane (DTHFP) is preferred as the Lewis base to increase the hydrogenation ratio along with the vinyl bond amount.

The block copolymer (A1) may be subjected to hydrogenation reaction to obtain the hydrogenated block copolymer (A1'). The method of subjecting the unhydrogenated block copolymer (A1) to hydrogenation reaction includes a method of dissolving the resulting unhydrogenated block copolymer (A1) in a solvent inert to a hydrogenation catalyst, or of using the unhydrogenated block copolymer (A1) as it is without isolating it from the reaction solution and reacting it with hydrogen in the presence of a hydrogenation catalyst.

Examples of the hydrogenation catalyst include Raney nickel; a heterogeneous catalyst in which a metal such as Pt, Pd, Ru, Rh or Ni is supported on a carrier such as carbon, alumina or diatomaceous earth; a Ziegler type catalyst comprising a combination of a transition metal compound, and an alkyl aluminum compound, an alkyl lithium compound; and a metallocene type catalyst. The hydrogenation reaction may usually be performed under the conditions of a hydrogen pressure of 0.1 MPa or more and 20 MPa or less, a reaction temperature of 20°C or more and 250°C or less, and a reaction time of 0.1 hours or more to 100 hours or less.

When a polymer composition (hereinafter also referred to as "polymer composition (A2)") comprising the block copolymer (A1) or hydrogenated block copolymer (A1') with a softener for hydrocarbon-based rubber is used as the vibration damping elastomer (A), the softener for hydrocarbon-based rubber that may be used includes, for example process oils such as paraffinic oils, naphthenic oils and aromatic oils, liquid paraffin. Among these, process oils such as paraffinic oils and naphthenic oils are particularly preferred. These may be used singly or in combination of two or more types thereof.

When the vibration damping elastomer (A) comprises the polymer composition (A2), the content of the softener for hydrocarbon-based rubber in the polymer composition (A2) is preferably 50 to 300 parts by mass, more preferably 60 to 200 parts by mass, and still more preferably 60 to 150 parts by mass, based on 100 parts by mass of the block copolymer (A1) and/or hydrogenated block copolymer (A1'). When the content of the softener for hydrocarbon-based rubber is within the above range, an elastomer having moderate rubber elasticity can be obtained.

In the present invention, 4-methyl-1-pentene·α-olefin copolymer (hereinafter also referred to as "copolymer (A3)") may be used as the vibration damping elastomer (A). Examples of the copolymer (A3) specifically include a copolymer as described, for example, in JP 2012-82388 A.

The vibration damping elastomer (A) preferably has a glass transition temperature of 60°C or less, more preferably 50°C or less, also preferably -30°C or more, and more preferably -20°C or more. When the glass transition temperature of the vibration damping elastomer (A) is within the above range, the tan δ value of the component A comprising the vibration damping elastomer (A) tends to be higher in the temperature range of the typical living environment, leading to improved vibration damping performance of the resulting composite fiber. In the present invention, the above glass transition temperature in the vibration damping elastomer (A) may be the glass transition temperature of the elastomer itself or the glass transition temperature of the polymer moieties constituting the above elastomer.

In the present invention, the melt viscosity of the vibration damping elastomer (A) at 250°C is preferably 3000 poise or less, more preferably 2500 poise or less, also, preferably 500 poise or more, more preferably 700 poise or more, from the viewpoints of vibration damping performance, spinnability and the like. Further, the above melt viscosity may be measured, for example, using a capillary rheometer. It is also the same in the thermoplastic elastomer (B) described below.

Commercially available products may be used as the vibration damping elastomer (A). The commercially available products that may be used as the vibration damping elastomer (A) in the present invention include, for example, "HYBRAR" (registered trademark) and "SEPTON" (registered trademark) manufactured by Kuraray Co., Ltd., as a hydrogenated block copolymer (A1'), "EARNESTON" (registered trademark) manufactured by Kuraray Plastics Co., LTD., as a polymer composition (A2), and "ABSORTOMER" (registered trademark) manufactured by Mitsui Chemicals, Inc., as a copolymer (A3).

In the present invention, the component A may comprise the vibration damping elastomer (A) described above. In addition to the vibration damping elastomer (A), it may contain, for example, other (co)polymers, antiblocking agents, thermal stabilizers, antioxidants, light stabilizers, UV absorbers, lubricants, crystal nucleating agents, foaming agents, and coloring agents as necessary as long as they do not affect the effects of the present invention. When the component A contains components other than the vibration damping elastomer (A), the content of the other components is preferably 50% by mass or less, more preferably 40% by mass or less, and still more preferably 30% by mass or less based on the total mass of the component A. In one embodiment of the present invention, the component A is substantially composed of the vibration damping elastomer (A).

Other (co)polymers that may be contained in the vibration damping elastomer (A) include, for example, polyolefin-based resins from the viewpoint of improving the strength, moldability, chemical resistance, and heat resistance. Examples of the polyolefin-based resins include propylene- and ethylene-based polymers. The propylene-based polymers usable are, for example, homopolypropylenes, random polypropylenes, block polypropylenes, atactic polypropylenes, and syndiotactic polypropylenes. Among these, it is particularly preferable to use random polypropylenes and block polypropylenes. The ethylene-based polymers usable are, for example, ethylene homopolymers such as medium density polyethylene, low density polyethylene (LDPE), and high density polyethylene (HDPE); ethylene α-olefin copolymers such as ethylene 1-butene copolymer, ethylene 1-hexene copolymer, ethylene 1-heptene copolymer, ethylene 1-octene copolymer, ethylene 4-methyl-1-pentene copolymer, ethylene 1-nonene copolymer, and ethylene 1-decene copolymer.

The component A preferably has a peak top intensity of tan δ of 0.5 or more. When the peak top intensity of tan δ of the component A is 0.5 or more, high vibration damping performance is easily secured in the composite fiber comprising the component A. From the viewpoint of more improving the vibration damping performance, it is preferably 0.6 or more, more preferably 0.8 or more, still more preferably 1.0 or more, and particularly preferably 1.5 or more. The upper limit value of the peak top intensity of tan δ of the component A is not particularly limited, but from the viewpoints of handling properties and spinnability of the component A, for example, it may be 4.0 or less, and preferably 3.0 or less.

The peak top of tan δ of the component A is preferably located in the temperature range between -30°C and 70°C, inclusive. When the tan δ peak value of the component A is in the above temperature range, it is possible to obtain a composite fiber that may exert high vibration damping performance when used under general environmental temperatures. The peak top of tan δ of the component A is more preferably located in the temperature range of -25°C or more, and more preferably -20°C or more. Also, it is more preferably located in the temperature range of 65°C or less, and more preferably 60°C or less.

The maximum width of the temperature range where the tan δ value of the component (A) continuously exceeds 0.3 or more is preferably 5°C or more. When the maximum width of the temperature range is 5°C or more, the composite fiber, which is formed by containing the core component comprising the component A, high vibration damping properties are easily exerted over a wide temperature range, thus making it possible to obtain a composite fiber that may adapt to various temperature environments. The maximum width of the temperature range is more preferably 10°C or more, more preferably 20°C or more, and particularly preferably 30°C or more, from the viewpoint of the ease of obtaining a composite fiber with high vibration damping properties over a wider temperature range. The upper limit value of the maximum width of the temperature range is not particularly limited, but is usually 100°C or less, for example, it may be 80°C or less.

The dispersion behavior of tan δ of the component A may be controlled to the desired range by mainly selecting the type of the vibration damping elastomer (A) used, within the above-described ranges. Especially, if the vibration damping elastomer (A) is the block copolymer (A1), hydrogenated block copolymer (A1') and/or polymer composition (A2), it may be controlled by selecting the content of the polymer block (a) in the block copolymers (A1) and (A1'), the vinyl bond amount and hydrogenation ratio in the polymer block (b), the components of the polymer blocks (a) and (b), and the glass transition temperature etc., within the above-described ranges.

### (Component B)

In the composite fiber of the present invention, the core component formed from the component A comprising the vibration damping elastomer (A) is at least partially covered with the component B comprising the thermoplastic elastomer (B).

Vibration damping elastomers with vibration damping performance generally tend to have high melt viscosities. This easily gives rise to problems such as difficulty in production itself because fibers strongly adhere to each other, or even if they may be produced, resulting in significantly poor unwinding properties. To solve such problems, it is effective to cover the core component with a component that hardly causes adhesion of mutual fibers during spinning. For example, there are composite fibers in which a core component is covered with a sheath component comprising a specific fiber-forming polymer or a readily soluble or degradable thermoplastic polymer (the above Patent Documents 1 and 2 and the like). On the other hand, although improvement in the unwinding properties and productivity can be expected by covering the core component with the sheath component, the vibration damping performance inherent in the core component may be impaired by the sheath component. Therefore, the temperature range where the composite fiber may exert vibration damping performance is relatively narrow, and depending on the temperature of the use environment, it may be difficult to sufficiently exert high vibration damping performance.

The composite fiber of the present invention comprises the thermoplastic elastomer (B) and covers the core component (A) with the component having moderate rubber-like elasticity (elastomer properties), and thereby the high vibration damping performance may be exerted in a wide temperature range without reducing or interfering with the vibration damping performance that the component A may inherently exert, while securing good unwinding properties and high-speed spinning properties.

The peak top intensity of tan δ of the thermoplastic elastomer (B) is less than 0.5. Higher tan δ values tend to increase the melt viscosity of the elastomer. Therefore, if the peak top intensity of tan δ is 0.5 more, it is difficult to sufficiently obtain the effects of improving spinnability and unwinding properties by covering it with the sheath component. The peak top intensity of tan δ of the thermoplastic elastomer (B) is preferably 0.45 or less, more preferably 0.35 or less, and still more preferably 0.25 or less, because the spinnability and unwinding properties are more easily improved. From the viewpoint of also imparting the highest possible vibration damping performance to the component B while securing the effects of improving spinnability and unwinding properties, the lower limit value of the peak top intensity of tan δ of the thermoplastic elastomer (B) is preferably 0.03 or more, more preferably 0.04 or more, and still more preferably 0.05 or more.

The peak top of tan δ of the thermoplastic elastomer (B) is preferably located in the temperature range between -60°C and 50°C, inclusive. When the tan δ peak value of the thermoplastic elastomer (B) is in the above temperature range, the vibration damping performance of the component A is hardly impaired when covering the component A, and a composite fiber with high vibration damping performance widely under general environmental temperatures can be obtained. The peak top of tan δ the thermoplastic elastomer (B) is more preferably located in the temperature range of -55°C or more, and still more preferably -50°C or more. Also, it is more preferably located in the temperature range of 45°C or less, and more preferably 40°C or less.

The maximum width of the temperature range where the tan δ value of the thermoplastic elastomer (B) continuously exceeds 0.03 or more is preferably 5°C or more. When the maximum width of the temperature range is 5°C or more, the vibration damping performance of the component A is hardly impaired when covering the component A, and a composite fiber formed by including the thermoplastic elastomer (B) easily exerts high vibration damping properties over a wide temperature range, thus making it easier to obtain a composite fiber that may adapt to various temperature environments. The maximum width of the temperature range is more preferably 25°C or more, still more preferably 50°C or more, and particularly preferably 100°C or more, from the viewpoint of easily obtaining composite fibers with high vibration damping properties in a wider temperature range. The upper limit value of the maximum width of the temperature range is not particularly limited, but is usually 200°C or less. For example, it may be 150°C or less.

The glass transition temperature of the thermoplastic elastomer (B) is preferably 45°C or less. The thermoplastic elastomer (B) has a relatively low glass transition temperature, thereby making it easier to enhance the vibration damping performance of the component B itself and to obtain a composite fiber that may exert high vibration damping performance over a wide temperature range while sufficiently maintaining the vibration damping performance of the component A. From such viewpoints, the glass transition temperature of the thermoplastic elastomer (B) is more preferably 40°C or less, still more preferably 30°C or less, and particularly preferably 20°C or less. Also, it is preferably -60°C or more, and more preferably -50°C or more.

The flexural modulus of the thermoplastic elastomer (B) is preferably 600 MPa or less. When the flexural modulus is 600 MPa or less, the vibration damping performance of the component A is hardly impaired when covering the component A, and a composite fiber formed by including the thermoplastic elastomer (B) easily exerts high vibration damping properties over a wide temperature range, thus making it easier to obtain a composite fiber that may adapt to various temperature environments. From such viewpoints, the flexural modulus of the thermoplastic elastomer (B) is more preferably 500 MPa or less, and still more preferably 450 MPa or less. The lower limit value of the flexural modulus of the thermoplastic elastomer (B) is not particularly limited and is usually 50 MPa or more. The above flexural modulus may be measured, for example, using a universal material testing machine.

The melt viscosity of the thermoplastic elastomer (B) at 250°C is preferably 3000 poise or less, and more preferably 2500 poise or less. Also, it is preferably 500 poise or more, and more preferably 700 poise or more. When the melt viscosity of the thermoplastic elastomer (B) at 250°C is lower than the above upper limit value, handling properties at low temperatures may be improved, and high speed spinning and good unwinding properties can be expected. When the melt viscosity is higher than the above lower limit valuee, the resulting composite fiber tends to have high strength.

The thermoplastic elastomer (B) is not particularly limited as long as it is an elastomer in which the peak top intensity of tan δ becomes less than 0.5. For example, a polyamide-based elastomer, a polyester-based elastomer, a polyolefin-based elastomer, and a polyurethane-based elastomer may be used. The thermoplastic elastomer (B) in the present invention is preferably at least one selected from the group consisting of a polyamide-based elastomer and a polyester-based elastomer, since it easily exhibits the specific dispersion behavior of tan δ as described above. The thermoplastic elastomer (B) may be used singly or in combination of two or more types thereof.

Examples of the polyamide-based elastomers include polyamide resins such as aliphatic polyamides (e.g., polyamide 6, polyamide 66, polyamide 11, polyamide 12, polyamide 610, polyamide 612), a polyether block amide copolymers consisting of a hard segment composed of a polyamide unit and a soft segment, a polyether amide copolymer, and a polyester amide copolymer.

The polyether block may be a linear or branched chain saturated aliphatic polyether having 2 to 10 carbon atoms, preferably a segment having 2 to 5 carbon atoms between ether bonds (for example, polyethylene glycol, polypropylene glycol, polytrimethylene glycol, polytetramethylene glycol, polypentamethylene glycol, and polyhexamethylene glycol). The ratio of the hard segment and the soft segment (mass ratio) may be, for example, 50/50 to 95/5, preferably 60/30 to 92/8, and more preferably 70/30 to 90/10. Among these, a polyether block amide copolymer and a polyether amide copolymer are particularly preferred.

Commercially available products may be used as the polyamide-based elastomer, including, for example, "VESTAMID" (registered trademark) and "DIAMID" (registered trademark) manufactured by Polyplastic-Evonik Corporation, "PEBAX" (registered trademark) manufactured by ARKEMA Corporation, and "UBESTA XPA" (registered trademark) manufactured by UBE Corporation.

Examples of the polyester-based elastomer include a polyetherester copolymer and a polyester ester copolymer. Among these, a polyetherester copolymer is preferred.

Commercially available products may be used as the polyester-based elastomer, including, for example, "SKYPEL" (registered trademark) manufactured by SK Chemicals Co., Ltd., "Hytrel" (registered trademark) manufactured by DUPONT-TORAY CO., LTD., and "PELPRENE" (registered trademark) manufactured by TOYOBO CO., LTD..

The component B may comprise the thermoplastic elastomer (B) described above, and in addition to the thermoplastic elastomer (B), may contain, for example, other (co)polymers, blocking inhibitors, heat stabilizers, antioxidants, light stabilizers, UV absorbers, lubricants, crystal nucleating agents, foaming agents and coloring agents as necessary as long as they do not affect the effects of the present invention. When the component B contains components other than the thermoplastic elastomer (B), the content of the other components is preferably 10% by mass or less, more preferably 5% by mass or less, and still more preferably 3% by mass or less based on the total mass of the component B. In one embodiment of the present invention, the component B is substantially composed of the thermoplastic elastomer (B).

The component B preferably has a dispersion behavior of tan δ, where the difference between the peak top temperature of tan δ of the component A and the peak top temperature of tan δ of the component B is between 0°C and 85°C or less, in the relationship with the component A. When the difference between the respective peak top temperatures in the component A and the component B is within the above range, the vibration damping performance of the component A is hardly impaired, and a composite fiber which easily exerts high vibration damping properties over a wide temperature range, and may adapt to various temperature environments can be obtained, while securing the effects of improving spinnability and unwinding properties of the component B. From such viewpoints, the difference between the respective peak top temperatures is more preferably 80°C or less, still more preferably 75°C or less, particularly preferably 70°C or less, and especially preferably 65°C or less.

The component B preferably has a dispersion behavior of tan δ, where the difference between the peak top intensity of tan δ of the component A and the peak top intensity of tan δ of the component B is between 0.05 and 4.0, in the relationship with the component A. When the difference between the respective peak top intensities in the component A and the component B is within the above range, the component B itself is likely to have moderate vibration damping performance, and when covering the component A, the vibration damping properties of the component A are hardly impaired, thus making it easier to obtain a composite fiber excellent in vibration damping performance. From such viewpoints, the difference between the peak top intensities is more preferably 3.5 or less, and still more preferably 3.0 or less.

As described above, the component B preferably has the desired dispersion behavior of tan δ in the relationship with the component A. The peak top intensity of tan δ, peak top temperature thereof, and/or maximum width of the temperature range where the tan δ value continuously exceeds 0.03 or more may be determined as appropriate in the relationship with the component A constituting the composite fiber.

In one embodiment of the present invention, the respective values and suitable ranges of the component B are similar to, for example, the values and ranges of the peak top intensity, peak top temperature thereof and/or maximum width of the temperature range where the tan δ values continuously exceeds 0.03 or more in the thermoplastic elastomer (B) described above.

The dispersion behavior of tan δ of the component B may be controlled to the desired range by mainly selecting the type of thermoplastic elastomer (B) used, particularly the glass transition temperature of the thermoplastic elastomer (B), within the aforementioned range.

The composite fiber of the present invention has an excellent balance between vibration damping properties-improving effects and unwinding properties- and/or spinnability-improving effects by covering the core component (the component A) comprising the above-mentioned specific vibration damping elastomer (A) with the sheath component (the component (B)) comprising the specific thermoplastic elastomer (B). Therefore, compared with conventional vibration damping composite fibers, the composite fiber of the present invention has less influence on the vibration damping performance of the component A by covering it with the component B, and can exert high vibration damping performance in a wide temperature range under general living or environmental temperatures. In addition, compared with the case of spinning the component A alone, step passability in the fibrillating step becomes better, which is potential for high speed and high yield production. Furthermore, the component A is covered with the component B, thereby allowing easy unwinding during processing, which is advantageous in terms of the productivity of the fiber structure using the composite fiber.

### (Method for Producing Composite Fiber)

The composite fiber of the present invention can be fibrillated into a fiber using a conventionally known composite spinning device after determining the combination of the component A and the component B. For example, it may be produced by any yarn-making method, such as a method in which melt-spinning is performed at a low or medium speed to obtain an undrawn yarn, a method of melt-spinning at a low or medium speed followed by drawing, a direct spinning and drawing method at a high speed, or a method of drawing and false twisting simultaneously or subsequently after spinning. Among these, from the viewpoint of securing the fiber productivity and high vibration damping performance, it is preferable to produce it by a method in which melt-spinning is performed at a low or medium speed to obtain an undrawn yarn, or a direct spinning and drawing method.

In the composite fiber of the present invention, the composite ratio (mass ratio) of the component A and the component B is preferably 90:10 to 10:90 for A:B, more preferably 85:15 to 15:85, and still more preferably 80:20 to 20:80. When the composite ratio of the component A and the component B is within the above range, while sufficiently securing high vibration damping performance of the component A, mutual adhesion of fibers is suppressed in the fibrillating step, enabling high-speed and high-yield production.

In the cross-section of the composite fiber of the present invention, the component B need not cover the entire fiber surface. However, in order to secure the winding step properties in the fibrillation, handling properties after winding, and good step passability, it is important that, in the fiber cross-section, the component A serves as the core, and the component B covers at least 70%, preferably covers 80% or more, more preferably covers 90% or more of the entire cross-sectional perimeter of the component A, and it may substantially covers 100% of the entire cross-sectional perimeter of the component A.

In the present invention, the shape of the composite fiber may be a core-sheath type composite fiber, a sea-island type composite fiber, a split-type composite fiber. The composite form of the present invention is not particularly limited as long as the effects of the present invention are obtained, and may be concentric, eccentric, or multicore type. The fiber cross-sectional shape of component A may be a circular cross-sectional shape, or a modified cross-sectional shape such as a triangular, flat, or multifoliate shape. Furthermore, it is also possible to provide a hollow inside the component A, which may have various cross-sectional shapes, such as a single-hole hollow, or a porous hollow with two or more holes.

The monofilament fineness of the composite fiber of the present invention may be set according to the purpose. From the viewpoints of facilitating the production of composite fibers and of improving spinnability, it may be selected, for example, from the range of 0.3 to 50 dtex, and preferably 0.3 to 40 dtex. In the composite fibers of the present invention, it is also possible to obtain fibers having a fineness of 6 dtex or less while preventing yarn breakage. These fibers may be used not only as long fibers but also as short fibers or shortcut fibers.

From the viewpoint of securing high vibration damping performance, the composite fiber of the present invention preferably has a peak top intensity of tan δ of 0.15 or more, more preferably 0.2 or more, still more preferably 0.25 or more, particularly preferably 0.3 or more, and especially preferably 0.35 or more. The upper limit value thereof is not particularly limited, but is usually 1.0 or less.

In the present invention, the tan δ of composite fibers is measured at a frequency of 10 Hz and a measurement temperature of -70 to 100°C using a dynamic viscoelasticity measuring device according to JIS K 7244-4. In detail, it may be measured according to the method described in examples described below.

From the viewpoint of securing high vibration damping performance that may be exerted in the general environmental temperature range, the peak top temperature of tan δ of the composite fiber is preferably -5°C or more, more preferably 0°C or more, and still more preferably 5°C or more. Also, it is preferably 50°C or less, more preferably 45°C or less, and still more preferably 40°C or less. Furthermore, from the viewpoint of securing high vibration damping performance that may be exerted over a wider temperature range, the maximum width of the temperature range where the tan δ value is 0.1 or more is preferably 10°C or more, more preferably 15°C or more, and still more preferably 20°C or more in the composite fiber of the present invention. The upper limit value thereof is not particularly limited, but is usually 50°C or less.

The composite fibers of the present invention may be used as fiber structures that are various fiber aggregates. Here, examples of the fiber structure include various woven and knitted fabrics and non-woven fabrics. Since the composite fibers of the present invention can exert high vibration damping performance particularly over a wide temperature range, it is suitable for various applications used in various environmental temperatures. Such applications specifically include, for example, sports apparel, materials for sporting goods, inner wears, stockings, socks, shoe materials, cushioning materials, sheet materials, carpet materials, floor mats, bedding articles, air filters, filters, sound attenuating materials, sound absorbing materials, and medical supplies.

### [Examples]

The present invention is described in more detail below based on examples, but the following examples do not limit the present invention.

### 1. Preparation of Component A

Hydrogenated block copolymers 1 to 4 were prepared as vibration damping elastomers as follows.

### (1) Hydrogenated block copolymer 1: Used in Examples 1, 5 to 10 and Comparative Examples 1 to 5

In a pressure-resistant vessel that had been dried by nitrogen substitution, 5 kg of cyclohexane as a solvent and 8.7 g of a solution of 10.5% by mass concentration of sec-butyl lithium in cyclohexane as an anionic polymerization initiator were charged. Then, after raising the temperature in the pressure-resistant vessel to 50°C, 0.1 kg of styrene was added and the mixture was polymerized for 1 hour. At a vessel temperature of 50°C, 6.3 g of 2,2-di(2-tetrahydrofuryl)propane (DTHFP) were added as a Lewis base, and a liquid mixture of 0.82 kg of isoprene and 0.65 kg of butadiene was added dropwise over 5 hours, followed by polymerization for 2 hours. Further, 0.1 kg of styrene was added thereto, followed by polymerization for 1 hour to obtain a reaction solution containing a polystyrene-poly(isoprene/butadiene)-polystyrene triblock copolymer.

To the resulting reaction solution, a Ziegler-based hydrogenation catalyst formed from nickel octylate and trimethylaluminum was added under a hydrogen atmosphere, and allowed to react for 5 hours under the conditions of a hydrogen pressure of 1 MPa and 80°C. After allowing the reaction solution to cool and releasing the pressure, the catalyst was removed by water washing, and vacuum dried to obtain a hydrogenated product of the polystyrene-poly(isoprene/butadiene)-polystyrene triblock copolymer (hereinafter also referred to as "hydrogenated block copolymer 1").

### (2) Hydrogenated block copolymer 2: Used in Example 2

In a pressure-resistant vessel that had been dried by nitrogen substitution, 5 kg of cyclohexane as a solvent and 25 g of a solution of 10.5% by mass concentration of sec-butyl lithium in cyclohexane as an anionic polymerization initiator were charged. Then, after raising the temperature in the pressure-resistant vessel to 50°C, 0.3 kg of styrene was added and the mixture was polymerized for 1 hour. At a vessel temperature of 50°C, 17 g of 2,2-di(2-tetrahydrofuryl)propane (DTHFP) were added as a Lewis base, and a mixed liquid of 0.82 kg of isoprene and 0.67 kg of butadiene was added dropwise over 5 hours, followed by polymerization for 2 hours. Further, 0.3 kg of styrene was added thereto, followed by polymerization for 1 hour to obtain a reaction solution containing a polystyrene-poly(isoprene/butadiene)-polystyrene triblock copolymer.

To the resulting reaction solution, a Ziegler-based hydrogenation catalyst formed from nickel octylate and trimethylaluminum was added under a hydrogen atmosphere, and allowed to react for 5 hours under the conditions of a hydrogen pressure of 1 MPa and 80°C. After allowing the reaction solution to cool and releasing the pressure, the catalyst was removed by water washing, and vacuum dried to obtain a hydrogenated product of the polystyrene-poly(isoprene/butadiene)-polystyrene triblock copolymer (hereinafter also referred to as "hydrogenated block copolymer 2").

### (3) Hydrogenated block copolymer 3: Used in Example 3

In a pressure-resistant vessel that had been dried by nitrogen substitution, 5 kg of cyclohexane as a solvent and 8.7 g of a solution of 10.5% by mass concentration of sec-butyl lithium in cyclohexane as an anionic polymerization initiator were charged. Then, after raising the temperature in the pressure-resistant vessel to 50°C, 0.1 kg of styrene was added and the mixture was polymerized for 1 hour. At a vessel temperature of 50°C, 3.2 g of 2,2-di(2-tetrahydrofuryl)propane (DTHFP) were added as a Lewis base, and a mixed liquid of 0.82 kg of isoprene and 0.65 kg of butadiene was added dropwise over 5 hours, followed by polymerization for 2 hours. Further, 0.1 kg of styrene was added thereto, followed by polymerization for 1 hour to obtain a reaction solution containing a polystyrene-poly(isoprene/butadiene)-polystyrene triblock copolymer.

To the resulting reaction solution, a Ziegler-based hydrogenation catalyst formed from nickel octylate and trimethylaluminum was added under a hydrogen atmosphere, and allowed to react for 5 hours under the conditions of a hydrogen pressure of 1 MPa and 80°C. After allowing the reaction solution to cool and releasing the pressure, the catalyst was removed by water washing, and vacuum dried to obtain a hydrogenated product of the polystyrene-poly(isoprene/butadiene)-polystyrene triblock copolymer (hereinafter also referred to as "hydrogenated block copolymer 3").

### (4) Hydrogenated block copolymer 4: Used in Example 4

In a pressure-resistant vessel that had been dried by nitrogen substitution, 5 kg of cyclohexane as a solvent and 12 g of a solution of 10.5% by mass concentration of sec-butyl lithium in cyclohexane as an anionic polymerization initiator were charged. Then, after raising the temperature in the pressure-resistant vessel to 50°C, 0.1 kg of styrene was added and the mixture was polymerized for 1 hour. At a vessel temperature of 50°C, 3.2 g of 2,2-di(2-tetrahydrofuryl)propane (DTHFP) were added as a Lewis base, and 1.5 kg of isoprene were added dropwise over 5 hours, followed by polymerization for 2 hours. Further, 0.1 kg of styrene was added thereto, followed by polymerization for 1 hour to obtain a reaction solution containing a polystyrene-polyisoprene-polystyrene triblock copolymer.

To the resulting reaction solution, a Ziegler-based hydrogenation catalyst formed from nickel octylate and trimethylaluminum was added under a hydrogen atmosphere, and allowed to react for 5 hours under the conditions of a hydrogen pressure of 1 MPa and 80°C. After allowing the reaction solution to cool and releasing the pressure, the catalyst was removed by water washing, and vacuum dried to obtain a hydrogenated product of the polystyrene-polyisoprene-polystyrene triblock copolymer (hereinafter also referred to as "hydrogenated block copolymer 4").

### (5) Composition of component A

As shown in Table 1, the hydrogenated block copolymers 1 to 4 (100% by mass) obtained above were used as components A1 to A4, respectively, and a mixture consisting of 80% by mass of the above hydrogenated block copolymer 1 and 20% by mass of polypropylene ("Polypropylene Y-2005 GP" manufactured by Prime Polymer Co., Ltd.) was used as component A5.

### 2. Compositions/Physical Properties of Vibration Damping Elastomers (Hydrogenated Block Copolymers) and/or Component A

The compositions of the hydrogenated block copolymers 1 to 4 obtained above, and various physical properties of the hydrogenated block copolymers and/or component A were measured according to the following methods. The results are shown in Table 1.

### (1) Content of Polymer Block (a)

The hydrogenated block copolymer was dissolved in CDCl₃ and ¹H-NMR spectrum measurement [device: ADVANCE 400 Nanobay (manufactured by Bruker Corporation), measurement temperature: 30°C] was performed. The content of the polymer block (a) was calculated from the peak intensity derived from styrene.

### (2) Nuclear Hydrogenation Ratio of Polymer Block (a)

Each of the block copolymers before and after hydrogenation was dissolved in CDCl₃ and ¹H-NMR spectrum measurement [instrument: ADVANCE 400 Nanobay (manufactured by Bruker Corporation), measurement temperature: 30°C] was performed. The nuclear hydrogenation ratio was calculated from the content of aromatic vinyl compounds in the unhydrogenated block copolymer and the content of aromatic vinyl compounds in the hydrogenated block copolymer.

### (3)Vinyl Bond Amount

The block copolymer before hydrogenation was dissolved in CDCl₃ and ¹H-NMR spectrum measurement [Device: ADVANCE 400 Nanobay (manufactured by Bruker Corporation), measurement temperature: 30°C] was performed. The vinyl bond amount (total content of 1,2-bonding units and 3,4-bonding units) was calculated from the ratio of the peak areas corresponding to 1,2- and 3,4-bonding units in isoprene structural units as well as 1,2-bonding units in butadiene structural units to the total peak area of the structural units derived from isoprene and/or butadiene.

### (4) Hydrogenation ratio

The hydrogenated block copolymer was dissolved in CDCl₃ and ¹H-NMR spectra measurement [instrument: ADVANCE 400 Nanobay (manufactured by Bruker Corporation), measurement temperature: 30°C] was performed. The hydrogenation ratio was calculated from the ratio of the peak areas derived from remaining olefins such as isoprene or butadiene and the peak areas derived from ethylene, propylene, and butylene.

### (5) Weight-Average Molecular Weight

The weight-average molecular weight (Mw) of the hydrogenated block copolymer in terms of polystyrene was determined by gel permeation chromatography (GPC) measurement.

### (6) Glass Transition Temperature

The glass transition temperature (Tg) of the polymer block (a) constituting hydrogenated block copolymers 1 to 4 was measured using a differential thermal scanning calorimeter [device: DICOVERY DSC25 (manufactured by TA Instruments Japan Inc.)] by raising the temperature from -100°C to 300°C at a temperature-raising rate of 10°C/min.

### (7) Measurement of Melt Viscosity

The melt viscosity was measured using a capillary rheometer [device: "Capilograph 1C PMD-C" (manufactured by TOYO SEIKI SEISAKU-SHO, LTD.)] under the conditions of 250°C and a shear rate of 1000 sec⁻¹.

### (8) tan δ Measurement

The measurement was performed, according to JIS K 7244-10, by applying vibration at a frequency of 1 Hz and raising the temperature from -70°C to 100°C at 3°C/min using a strain control type dynamic viscoelasticity measuring device [Device: ARES-G2 (manufactured by TA Instruments, Inc.)].

**[Table 1]**

| | | | Component A | | | | |
|---|---|---|---|---|---|---|---|
| | | | 1 | 2 | 3 | 4 | 5 |
| | | | Vibration damping elastomer (A) (hydrogenated block copolymer) | | | | |
| | | | 12 | | 3 | 4 | 1 |
| Polymer block (a) | Content (% by mass) | | 12 | 28 | 12 | 12 | 12 |
| | Vinyl aromatic structural unit | Type | Styrene | Styrene | Styrene | Styrene | Styrene |
| | | Composition ratio | 100 | 100 | 100 | 100 | 100 |
| | Nuclear hydrogenation ratio | | 3 | 3 | 3 | 2 | 3 |
| | Weight-average molecular weight | | 14,000 | 17,000 | 16,000 | 11,000 | 14,000 |
| | Glass transition temperature CC) | | 100 | 103 | 100 | 101 | 100 |
| Polymer block (b) | Content (% by mass) | | 88 | 72 | 88 | 88 | 88 |
| | Conjugated diene structural unit | Type | Isoprene/ butadiene | Isoprene/ butadiene | Isoprene/ butadiene | Isoprene | Isoprene/ butadiene |
| | | Composition ratio | 56/44 | 56/44 | 56/44 | 100 | 56/44 |
| | Vinyl bond amount (% by mol) | | 81 | 79 | 76 | 83 | 81 |
| | Hydrogenation ratio (% by mol) | | 95 | 95 | 91 | 86 | 95 |
| | Weight-average molecular weight | | 128,000 | 49,000 | 151,000 | 110,000 | 128,000 |
| | Vinylating agent | | DTHFP | DTHFP | DTHFP | DTHFP | DTHFP |
| Weight-average molecular weight of hydrogenated block copolymer | | | 142,000 | 66,000 | 167,000 | 121,000 | 142,000 |

| Physical properties of vibration damping elastomer (A) (hydrogenated block copolymer) | | | | | | | |
|---|---|---|---|---|---|---|---|
| Melt viscosity (250°C) (poise) | | | 1200 | 850 | 1300 | 1150 | 1200 |
| Glass transition temperature (°C) | | | 3 | 11 | -5 | 30 | 3 |
| Peak top intensity of tan δ | | | 2.0 | 1.6 | 2.2 | 2.1 | 2.0 |
| Peak top temperature of tan δ (°C) | | | 8 | 15 | 3 | 33 | 8 |
| Maximum width of temperature range where tan δ ≥ 0.3 | | | 52 | 47 | 50 | 54 | 52 |

| Com position/physical properties of component A | | | | | | | |
|---|---|---|---|---|---|---|---|
| Composition (% by mass) | Thermoplastic elastomer (A) | | 100 | 100 | 100 | 100 | 80 |
| | Polypropylene | | 0 | 0 | 0 | 0 | 20 |
| Peak top intensity of tan δ | | | 2.0 | 1.6 | 2.2 | 2.1 | 1.8 |
| Peak top temperature of tanδ (°C) | | | 8 | 15 | 3 | 33 | 8 |
| Maximum width of temperature range where tan δ ≥ 0.3 (°C) | | | 52 | 47 | 50 | 54 | 50 |

### 3. Composition of Component B

The component B used in the examples and comparative examples are as follows.
- Component B1: Used in Examples 1 to 4, 6 to 10 and Comparative Example 5 "VESTAMID E47-S1", manufactured by Polyplastic-Evonik Corporation
- Component B2: Used in Example 5
   "SKYPEL G163D" manufactured by SK Chemicals Co., Ltd.
- Component B3: Used in Comparative Example 1
   Modified polyethylene terephthalate with an intrinsic viscosity [η] of 0.64 copolymerized with 8% by mol isophthalic acid
- Component B4: Used in Comparative Example 2
   Ethylene-polyvinyl alcohol copolymer (manufactured by Kuraray Co., Ltd., saponification degree: 98.5, ethylene content: 8.0% by mol, polymerization degree: 380)
- Component B5: Used in Comparative Example 3
   "Polypropylene Y-2005 GP" manufactured by Prime Polymer Co., Ltd.

### 4. Composition/Physical Properties of Component B

Various properties of the component B were measured by the same method as in the measuring method for the various properties in the component A. The flexural modulus was measured by the following method. The results are shown in Table 2.

### (1) Flexural Modulus

The measurement was performed at a bending speed of 2 mm/min using a universal material testing machine [device: INSTRON 5966 (manufactured by Instron Corporation)] according to JIS K 7171.

**[Table 2]**

| | Component B (sheath component) | | | | |
|---|---|---|---|---|---|
| | 1 | 2 | 3 | 4 | 5 |
| | Thermoplastic elastomer (B) | | Thermoplastic resin | | |
| Polymer type | Polyamide elastomer | Polyester elastomer | Modified polyethylene terephthalate | Ethylene-polyvinyl alcohol copolymer | Polypropylene |
| Physical properties of component B | | | | | |
| Glass transition temperature (°C) | -46 | 3 | 70 | 75 | 0 |
| Melt viscosity (250°C) (poise) | 900 | 1500 | 2200 | 850 | 750 |
| Peak top intensity of tan δ | 0.14 | 0.16 | 0.28 | 0.26 | 0.05 |
| Peak top temperature of tan δ (C) | -50 | 5 | 75 | 78 | 4 |
| Maximum width of temperature range where tan δ ≥ 0.03 (°C) | 124 | 138 | 155 | 148 | 176 |
| Flexural modulus (MPa) | 130 | 310 | 2100 | 750 | 850 |

### 5. Production of Composite Fiber

### (1) Examples 1 to 10 and Comparative Example 5

Composite fibers of Examples 1 to 10 and Comparative Example 5 were each prepared according to the following methods.

### (i) Example 1

The component A (core component) and the component B (sheath component) were melted in separate extruders according to the composite ratio (A/B) shown in Table 3, and composite fibers were discharged from a conjugate spinneret with a core-sheath cross-section ( 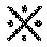 a sea-island cross section only in Example 7). Then, after threads discharged from the spinneret were cooled by a 1.0 m long horizontally blowing type cooling air device, a spinning oiling agent was applied to fibers which came out of the cooling air device, and they were subsequently wound through rollers at a take-up speed of 2500 m/min to obtain composite fibers of 185 dtex/24 filaments. A mineral-based oiling agent was used as the spinning oiling agent.

### (ii) Examples 2 to 4 and 10

Composite fibers were prepared in the same manner as in Example 1, except that the composition of the component A was changed in each of them.

### (iii) Example 5

Composite fibers were prepared in the same manner as in Example 1, except that the polymer type of the component B was changed.

### (iv) Example 6

Composite fibers were prepared in the same manner as in Example 1, except that the coverage of the component A by the component B was changed.

### (v) Example 7

Composite fibers were prepared in the same manner as in Example 1, except that the cross-sectional shape was changed from the core-sheath type to sea-island type.

### (vi) Examples 8 and 9

Composite fibers were prepared in the same manner as in Example 1, except that the composite ratio between the component A and the component B was changed.

### (vii) Comparative Example 5

Composite fibers were prepared in the same manner as in Example 1, except that the coverage of the component A by the component B was changed.

### (2) Comparative Example 1

Composite fibers of Comparative Example 1 were prepared according to the following method. Comparative Example 1 differs from Example 1 in the polymer type of the component B.

The component A (core component) and the component B (sheath component) were melted in separate extruders according to the composite ratio (A/B) shown in Table 3, and composites fibers were discharged from a conjugate spinneret with a core-sheath cross-section. Then, after threads discharged from the spinneret were cooled by a 1.0 m long horizontally blowing type cooling air device, they were serially introduced into a 1.0 m long, 30 mm inner diameter tube heater (inner wall temperature: 180°C) installed at a position 1.3 m directly below the spinneret and drawn in the tube heater. Thereafter, a spinning oiling agent was applied to fibers which came out of the tube heater, and they were subsequently wound through rollers at a take-up speed of 2500 m/min to obtain composite fibers of 185 dtex/24 filaments.

### (3) Comparative Example 2

Composite fibers of Comparative Example 2 were prepared according to the following method. Comparative Example 2 differs from Example 1 in the polymer type of the component B.

The component A (core component) and the component B (sheath component) were melted in separate extruders according to the composite ratios (A/B) shown in Table 3, and composite fibers were discharged from a conjugate spinneret with a core-sheath cross-section. Then, after threads discharged from the spinneret were cooled by a 1.0 m long horizontally blowing type cooling air device, they were serially introduced into a 1.0 m long, 30 mm inner diameter tube heater (inner wall temperature: 130°C) installed at a position 1.3 m directly below the spinneret and drawn in the tube heater. Thereafter, a spinning oiling agent was applied to fibers which came out of the tube heater, and they were subsequently wound through rollers at a take-up speed of 2500 m/min to obtain composite fibers of 185 dtex/24 filaments.

### (4) Comparative Example 3

A composite fiber of Comparative Example 3 was prepared according to the following method. Comparative Example 3 differs from Example 1 in the polymer type of component B.

The component A (core component) and the component B (sheath component) were melted in separate extruders according to the composite ratio (A/B) shown in Table 3, and composite fibers were discharged from a conjugate spinneret with a core-sheath cross-section. Then, after threads discharged from the spinneret were cooled by a 1.0 m long horizontally blowing type cooling air device, they were serially introduced into a 1.0 m long, 30 mm inner diameter tube heater (inner wall temperature: 100°C) installed at a position 1.3 m directly below the spinneret and drawn in the tube heater. Thereafter, a spinning oiling agent was applied to fibers which came out of the tube heater, and they were subsequently wound through rollers at a take-up speed of 2500 m/min to obtain composite fibers of 185 dtex/24 filaments.

### (5) Comparative Example 4

Fibers of Comparative Example 4 were prepared according to the following method. Comparative Example 4 differs from Example 1 in that it does not contain the component B.

The component A shown in Table 3 was melted in an extruder, and single fibers were discharged from a single spinneret with a round cross-section. Then, after threads discharged from the spinneret were cooled by a 1.0 m long horizontally blowing type cooling air device, a spinning oiling agent was applied to fibers which came out of the cooling air device, and they were subsequently wound through rollers at a take-up speed of 2500 m/min to obtain single fibers of 92 dtex/24 filaments.

### 6. Physical Properties/Characterization of Composite Fibers

Each physical property value of the composite fibers in the examples and comparative examples was measured by the following method. The respective results are shown in Table 3.

### (1) Cross-Sectional Shape

For the shape of the fiber cross section, after embedding fibers in paraffin, a microtome [device: PR-50 (manufactured by YAMATO KOHKI INDUSTRIAL CO., LTD.)] was used to prepare a slice of fiber-cross section, followed by observation with an optical microscope [device: ECLIPSE Ci (manufactured by Nikon Corporation)].

### (2) Coverage of component A by component B in fiber cross-section

From a fiber cross-section photograph, for 10 randomly selected filaments, the length of a fiber-covered portion of each filament was measured to calculate the percentage of the length of the covered portion to the perimeter of the fiber cross-section as the coverage, and the average coverage of each of the filaments was obtained.

### (3) tan δ Measurement

Dynamic viscoelasticity was measured using a dynamic viscoelasticity measuring device [device: Rheogel E4000 (manufactured by UBM Corporation)] according to JIS K 7244-4 by imparting vibration at a frequency of 10 Hz and raising the temperature from -70°C to 100°C at 3°C/min.

### (4) Evaluation of Vibration Damping Properties

Tubular knitted fabrics each having a basis weight of a 200 g/m² were prepared from the fibers obtained in the examples and comparative examples. A 10 g iron ball was dropped to the tubular knitted fabric from a height of 30 cm, and the number of bounces of the iron ball was counted. The number of bounces of the iron ball was measured 10 times repeatedly and their average value was calculated and the vibration damping properties were evaluated based on the following criteria.
○: The number of bounces of the iron ball is less than 5 times.
×: The number of bounces of the iron ball is 5 times or more.

### (5) Unwinding Properties from Package

A fiber unwound at a speed of 200 m/min using a winder was wound, and unwinding properties were evaluated according to the following criteria.
○: No yarn breakage occurred for 300 minutes, and the resulting fiber was extremely good, with no fluff or loops at all.
×: Yarn breakage occurred one or more times for 300 minutes, and at least one fluff or loop occurred in the resulting fiber, which is thus defective.

### (6) Lightfastness

For lightfastness, tubular knitted fabrics each having a basis weight of 200 g/m² were prepared from the fibers obtained in the Examples and Comparative Examples. Using a UV fade meter [device: U48 (manufactured by Suga Testing Instruments Co., Ltd.)], the discoloration by 60-hour irradiation was determined on a gray scale in accordance with JIS L 1096.

**[Table 3]**

| | | Example | | | | | | | | | | Comparative Example | | | | |
|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 |
| Component A | Type (component A No.) | Component A1 | Component A2 | Component A3 | Component **A4** | Component A1 | Component A1 | Component A1 | Component A1 | Component A1 | Component A5 | Component A1 | Component A1 | Component A1 | Component A1 | Component A1 |
| Component B | Type (component B No.) | Component B1 | Component B1 | Component B1 | Component B1 | Component B2 | Component B1 | Component 81 | Component B1 | Component B1 | Component B1 | Component B3 | Component 64 | Component B5 | - | Component B1 |
| Composite ratio (A/B) | | 50/50 | 50/50 | 50/50 | 50/50 | 50/50 | 50/50 | 50/50 | 20/80 | 80/20 | 50/50 | 50/50 | 50/50 | 50/50 | - | 50/50 |
| Cross-sectional shape | | Core-sheath | Core-sheath | Core-sheath | Core-sheath | Core-sheath | Core-sheath | Sea-island | Core-sheath | Core-sheath | Core-sheath | Core-sheath | Core-sheath | Core-sheath | Round | Core-sheath |
| Coverage of component A by component B (%) | | 100 | 100 | 100 | 100 | 100 | 70 | 100 | 100 | 100 | 100 | 100 | 100 | 100 | 0 | 50 |
| Difference between peak top temperature of tan δ of component A and peak top temperature of tan δ of component B (°C) | | 58 | 65 | 53 | 83 | 3 | 58 | 58 | 58 | 58 | 58 | 67 | 70 | 4 | - | 58 |
| Difference between peak top Intensity of tan δ of component A and peak top Intensity of tan δ of component B | | 1.86 | 1.46 | 2.06 | 1.96 | 1.84 | 1.86 | 1.86 | 1.86 | 1.86 | 1.66 | 1.72 | 1.74 | 1.94 | - | 1.86 |
| Peak top intensity of tan δ | | 0.47 | 0.48 | 0.44 | 0.41 | 0.36 | 0.45 | 0.40 | 0.39 | 0.52 | 0.46 | 0.05 | 0.09 | 0.09 | - | - |
| Peak top temperature of tan δ (°C) | | 10 | 14 | 6 | 35 | 10 | 10 | 10 | 10 | 10 | 9 | 10 | 10 | 10 | - | - |
| Maximum width of temperature range where tan δ ≥ 0.1 (°C) | | 34 | 36 | 31 | 30 | 25 | 33 | 29 | 28 | 40 | 32 | - | - | - | - | - |
| Vibration-damping properties | | ○ | ○ | ○ | ○ | ○ | ○ | ○ | ○ | ○ | ○ | × | × | × | - | - |
| Unwinding properties | | ○ | ○ | ○ | ○ | ○ | ○ | ○ | ○ | ○ | ○ | ○ | ○ | ○ | × | × |
| Lightfastness | | Fourth grade | Fourth grade | Fourth grade | Fourth grade | Fourth grade | Fourth grade | Fourth grade | Fourth grade | Fourth grade | Fourth grade | Fourth grade | Fourth grade | Fourth grade | - | - |

It was confirmed that the composite fibers of Examples 1 to 10 according to the present invention had good unwinding properties, a wide maximum width of the temperature range where the peak top intensity of tan δ was high and the tan δ ≥ 0.1, and excellent vibration damping performance. On the other hand, it was confirmed that the composite fibers of Comparative Examples 1 to 3 containing no thermoplastic elastomer (B) as the component B had good unwinding properties, but the vibration damping properties of the component A were impaired, resulting in inferior vibration damping performance. The fibers of Comparative Example 4 having no component B, and the fibers of Comparative Example 5 having a low coverage of the component B had poor unwinding properties.

## Claims

1. A composite fiber comprising component A as a core component and component B at least partially covering the component A, wherein
the component A comprises a vibration damping elastomer having a peak top intensity of tan δ of 0.5 or more, and the component B comprises a thermoplastic elastomer having a peak top intensity of tan δ of less than 0.5, and the component B covers 70% or more of the cross-sectional perimeter of the component A in the fiber cross-section.

2. The composite fiber according to claim 1, wherein a difference between the peak top temperature of tan δ of the component A and the peak top temperature of tan δ of the component B is between 0°C and 85°C, inclusive.

3. The composite fiber according to claim 1 or 2, wherein the peak top of tan δ of the component A is located in the temperature range between -30°C and 70°C, inclusive.

4. The composite fiber according to any one of claims 1 to 3, wherein the peak top intensity of tan δ of the composite fiber is 0.15 or more.

5. The composite fiber according to any one of claims 1 to 4, wherein the vibration damping elastomer is a block copolymer comprising a polymer block (a) mainly composed of a vinyl aromatic compound and a polymer block (b) mainly composed of a conjugated diene-based compound and/or a hydrogenated product thereof.

6. The composite fiber according to claim 5 satisfying the following (1) and (2):
(1) the content of the polymer block (a) in the block copolymer and/or hydrogenated product thereof is 1 to 30% by mass, and
(2) the total content of 1,2-bonding units and 3,4-bonding units in the polymer block (b) in the block copolymer and/or hydrogenated product thereof is 70% by mol or more.

7. The composite fiber according to any one of claims 1 to 6, wherein the vibration damping elastomer is a hydrogenated product of a block copolymer comprising a polymer block (a) mainly composed of a vinyl aromatic compound and a polymer block (b) mainly composed of a conjugated diene-based compound, and wherein the hydrogenation ratio of the polymer block (b) in the hydrogenated product is 80% by mol or more.

8. The composite fiber according to any one of claims 1 to 7, wherein the thermoplastic elastomer has a glass transition temperature of less than 45°C.

9. The composite fiber according to any one of claims 1 to 8, wherein the thermoplastic elastomer is at least one type selected from the group consisting of a polyamide-based elastomer and a polyester-based elastomer.

10. A fiber structure comprising at least a portion of the composite fiber according to any one of claims 1 to 9.
